# EUROPEAN PATENT APPLICATION

(11) **EP 2 607 404 A1**
(43) Date of publication of application: **26.06.2013**
(21) Application number: 11010137.5
(22) Date of filing: 21.12.2011
(51) Int. Cl.: C08J 3/07, C08J 3/075, C08J 5/00, C08K 3/34

(54) **Composition and preparation of hydrogel nanocomposites with improved mechanical properties and use thereof.**

(71) Applicant: Université de Liège, 4031 Angleur (BE)
(72) Inventor: Herwats, Stéphane, 4000 Liège (BE); Detrembleur, Christophe, 4000 Liège (BE); Alexandre, Michaël, 4000 Liège (BE); Jérôme, Christine, 4000 Liège (BE)
(74) Representative: Donné, Eddy

(57) **Abstract**

Composition, preparation method and use of a hydrogel nanocomposite (HNC) material, containing one or more water soluble monomers (A), a water swelling clay mineral (B) with a high solubility in water, and water itself(C), with added components resulting in a high compression modulus of the HNC material.

## Description

The present invention relates to the composition and preparation of hydrogel nanocomposites (HNCs) with improved mechanical properties and applications thereof.

Hydrogels are a state of matter which is intermediate between solids and liquids, and consist of water inside a three dimensional network. They are used in numerous application fields such as pharmaceuticals, medical care, foods, packaging, sanitary goods, cosmetics, agriculture, civil engineering and other industrial fields.

Hydrogel nanocomposites (HNCs) or organic/inorganic hybrid hydrogels have recently emerged as novel hydrogel based materials with strongly improved properties compared to hydrogels produced by the conventional techniques (hereafter called "classical hydrogels"). These classical hydrogels are constituted by organic polymers crosslinked by covalent bonds, hydrogen bonds, ionic bonds and hydrophobic bonds. Physical entanglements of polymer chains or crystallites can also be responsible for the crosslinking. However, due to the heterogeneity of the network, these classical hydrogels have poor mechanical properties, particularly poor shock-absorption properties such as damping properties.

On the other hand, hydrogel nanocomposites (hereafter called HNCs) are composed of a water soluble polymer, a water swelling clay mineral that acts as a crosslinker and water. The preparation of those HNCs is described in US 6.943.206 (K. Haraguchi) and is performed by radically polymerizing a water soluble vinyl monomer in the presence of a water swelling clay mineral for example that with the trade name Laponite@ in water.

Compared to classical hydrogels, HNCs have superior mechanical properties among which a higher strength and higher fracture energy. Properties and applications of these HNCs have been recently reviewed by Haraguchi (Current Opinion in Solid State and Materials Science 2007, 11, 47). Mechanical properties such as tensile modulus, tensile strength and energy at break directly depend on the amount of water soluble polymer and clay. Higher contents of polymer and clay lead to HNCs with a higher tensile modulus, higher tensile strength and energy at break.

In order to prepare materials with a significantly higher mechanical resistance, one method is thus to raise the amount of clay. However the viscosity of the reaction medium strongly increases when clay is added to the monomer solution. An exceedingly high viscosity leads to non uniform reaction solutions with residual heterogeneities such as insufficient exfoliation of clay, poor dispersion of the free radical initiator and the presence of bubbles, all being detrimental for the final HNCs properties.

A well-known water swelling clay mineral used for HNCs is the synthetic hectorite clay mineral with trade name Laponite@ RD, and its medical grade equivalent Laponite® XLG, both having exactly the same behavior. But in fact, loadings higher than 5 wt% cannot be reached using the aforementioned Laponite® grades due to an exceedingly high viscosity of the reaction medium unless use is made of a troublesome mixing procedure utilizing rotation and revolution described in Macromolecules 2006, 39, 1898.

A second method is to increase the quantity cf monomer (ChemPhysChem 2005, 6, 3487) but this also leads tc an exceedingly high viscosity of the reaction medium and impedes a good dispersion of the clay.

The preparation of at least partially exfoliated HNCs was described in the patent application WO 2002024760. However, Chou Chuen-Shyong et al. use acid containing monomers which induce a high water absorption capacity. Consequently, the gel softens and only results in very poor mechanical properties.

Patent application WO 20090419C3 also provides a method to ensure a good dispersion of clay in HNCs. However, Ingrid Gustafson et al. produce gels comprising charged polymers which again will enhance the water absorption capacity and lead to gels with poor mechanical properties.

On the other hand, polymer/clay composites such as those described in US4977192 are completely solid structures which do not possess the shock absorbing capacity hydrogels may have.

There is a need for improvement of the mechanical properties of hydrogels to comply with the shock absorption capacity wanted while keeping material resistance sufficiently high.

It is therefore an objective of this invention to give a solution to one or more of the above-mentioned requirements for hydrogel nanocomposites or HNCs.

In order to characterize the HNCs obtained, we measured the uniaxial compression modulus and the Young's modulus, which are experimentally determined from the slope of stress-strain curves created during uniaxial compressive or tensile tests conducted on samples of the material. The tangent modulus of the initial, linear portion of a stress-strain curve are called compression modulus or Young's modulus respectively and were measured with an Instron 5566 instrument.

Compression tests were carried out for all HNCs with the same sample size (10 mm high and a 30 mm diameter) with a load of 500 N on the cell. Compression properties of HNC gels were obtained under the following conditions : compression speed 10 mm/min; compressions between 1 and 1.5 mm were used to determine the compressive modulus.

Tensile tests used the conditions as described in Macromolecules, 2003, 36, 5732.

In the present invention, we have discovered that the properties of HNCs can be strongly improved compared with Haraguchi's HNCs in US 6.943.206 by selecting particular compositions and more particularly by the combination of a low concentration of one or more water soluble monomers in the presence of a water swelling clay mineral with a high solubility in water between 100 g/l and 330 g/l preferably between 150 and 330 g/l and most preferably between 200 and 330 g/l such as for example Laponite® type S482 that has a solubility of 330 g/l in water.

For a water swelling clay mineral to be soluble in water we understand that the viscosity of the clay dissolved in water remains equal or less than 3 Pa.s at a shearing rate of between 0.1 and 100 per second and at room temperature.

Preferably, the reaction mixture contains 5 to 20 wt% of clay and 10 wt% or less of one or more water soluble monomers since the compression modulus of the hydrogel decreases with lowering the soluble monomer concentration from 15 wt% to 10 wt% while the clay concentration is kept at 15 wt%, but then unexpectedly rises sharply with a further decrease from 10 to 5 wt% of the soluble monomer.

The invention also concerns a preparation method for HNCs according to this invention based on a radical polymerization process.

Surprisingly, we found that a preparation method for a HNC that adds a fraction of the water soluble polymer or polymers as a prepolymerized polymer before polymerization of the HNC itself is initiated, leads to HNC gels with a strongly improved compression modulus.

The invention also relates to the use of HNCs in general and more particularly according to this invention as a shock absorbing material in shock absorbing surfaces, devices or parts.

Surprisingly, we have observed that, for the same monomer and clay content, copolymerizing at least two water soluble monomers in the presence of the highly soluble clay leads to strongly improved mechanical properties compared to the same HNCs prepared from one monomer counterpart only. For instance, the compression modulus can be increased by more than 1000% compared to Haraguchi's HNCs (example 22 of US 6,710,104).

Clearly, compared to Haraguchi's HNCs,
(i) the range of mechanical properties that can be reached is strongly extended, and
(ii) lower amounts of clay and monomers are required for obtaining similar mechanical properties that are beneficial for the homogeneity of the gel since the reaction solutions are less viscous and are highly desirable for economical reasons.

Surprisingly, we found evidence that a synergistic effect occurs when in the presence of the highly soluble clay, a water soluble monomer such as N,N-dimethylacrylamide that leads to a water soluble polymer is copolymerized with a water soluble monomer such as 2-hydroxyethylmethacrylate that leads to a water insoluble polymer.

The fact that extraordinary mechanical properties are obtained using reaction mixtures of moderate viscosity is also a strong advantage since this allows other fillers to be added to the same reaction mixture prior to gelification.

Preferably the clay contains a dispersing agent, e.g. one or more of the following types : salts of carboxylic acids with group I metal ions or with ammonium ions, group I metal or ammonium salts of pyrophosphate, or group I metal or ammonium salts of bisphosphonates of the general formula (PO₃)₂CR₁R₂ wherein
R₁ = OH, R₂ = CH₃ (etidronate)
R₁, R₂ = Cl (chlorodronate)
R₁ = OH, R₂ = CH₂CH₂NH₂ (pamidronate)
R₁ = OH, R₂ = (CH₂) ₃NH₂ (alendronate)
R₁ = H, R₂ = SPhCl (tiludronate)
R₁ = OH, R₂ = (CH₂) ₅NH₂ (neridronate)
R₁ = OH, R₂ = (CH₂) ₂N (CH₃) ₂ (olpadronate),
or other compounds that satisfy the general formula of bisphosphonates.

Preferably, the carboxylic acids are alkyl-carboxylic acids or α-hydroxy-alkyl-carboxylic acids, wherein alkyl stands for C1 to C12 or H.

An advantage of the use of dispersing agents is that the clay can be dissolved in a homogeneous way, so as to facilitate a homogeneous polymerization of monomers in the solution. By dissolving in a homogeneous way, one means the formation of a sol.

It was found that free radical initiators can be used in the radical polymerization process that differ from the K₂S₂O₈/TEMED redox system reported by Haraguchi.

We have discovered that improved HNCs can be obtained by adding other inorganic nanoparticles such as silica particles or gold nanoparticles to the reaction mixture, thereby increasing the compression modulus of the HNCs.

We have also discovered that the addition of an aqueous dispersion or emulsion of a water insoluble polymer to the reaction medium prior to gelification leads to HNCs with an improved compression modulus.

With regard to the state of the art, reported in US 6.943.206 by Haraguchi, this invention is different in that:
1) A mixture of water soluble vinyl monomers is radically polymerized in the presence of the highly soluble water swelling clay.
2) The mixture of water soluble vinyl monomers can be
   (i) a mixture of at least two water soluble vinyl monomers that form water soluble polymers or
   (ii) a mixture of at least one water soluble vinyl monomer that forms a water soluble polymer and of at least one water soluble vinyl monomer that forms a water insoluble polymer. The water insoluble polymer preferably swells in water, but this is not mandatory.

Other inorganic or organic fillers can be added to the reaction medium since its viscosity is not exceedingly high. These fillers are added to provide to the HNCs some important properties required by the targeted application.
3) Ethylene glycol or other alcohols can be added to the reaction mixture to decrease the crystallization temperature of HNCs, necessary when applications at low temperature (<0°C) are targeted.
4) A prepolymerized fraction of a water soluble polymer can be added to the reaction mixture in order to improve the mechanical properties of the HNC.
5) A water insoluble polymer can be added to the reaction medium in order to improve the mechanical properties of the HNC. This insoluble polymer is added as an aqueous dispersion or emulsion.

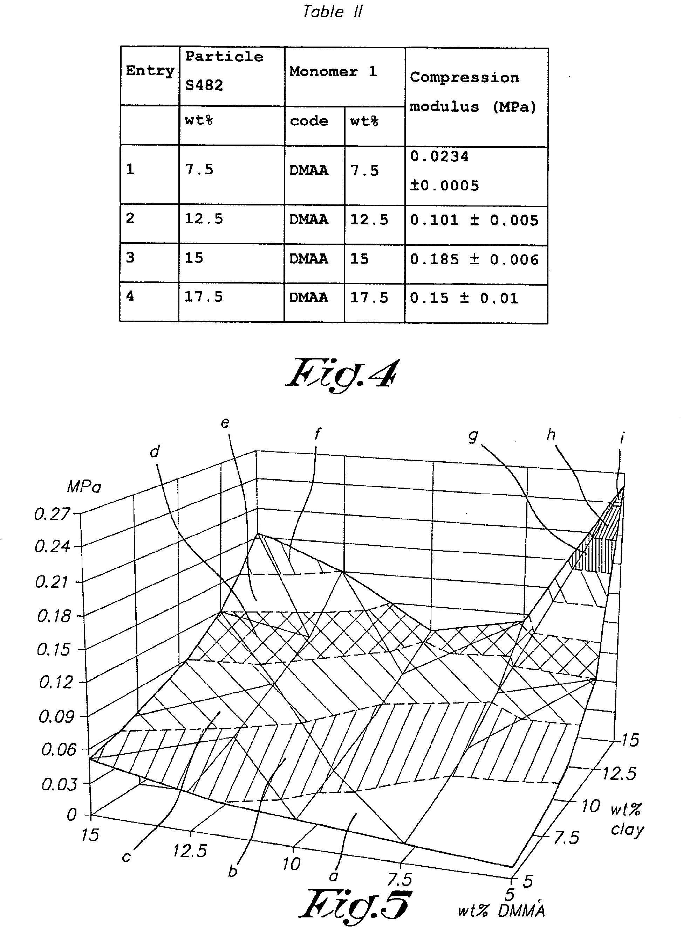

In order to reach a very high compression modulus e.g. > 0.20 MPa), it is not necessary to target very high clay and polymer contents (cfr. Figure 5). This is in sharp contrast to statements made by Haraguchi (Advanced Materials, 2002, 14, 1120).

We have discovered that the addition of HAuCl4 to an aqueous dispersion of the highly soluble Laponite® S482 clay leads to the in-situ formation of gold nanoparticles by reduction of the gold salt. It is thought that the etidronate (tetrasodium (1-hydrcxyethylidene)bisphosphonate) molecules that are present at the surface of the Laponite® S482 clay are the reducing agent of the gold salt since Laponite® RD which lacks the etidronate does not exhibit this reduction. When HNCs according to the invention are produced in the presence of a low amount of HAuCl4, the compression modulus is strongly improved. It is obvious that the gold nanoparticles can also be added as such to the reaction mixture.

Typical examples of water soluble monomers that form water soluble polymers are acrylamides, N-substituted acrylamides derivatives, N,N-disubstituted acrylamides derivatives, methacrylamides, N-substituted methacrylamides derivatives, N,N-disubstituted methacrylamides derivatives, vinyl amides, some functional acrylates and methacrylates, acrylates and methacrylates bearing sugar moieties. Some examples are acrylamide, N-methylacrylamide, N-ethylacrylamide, cyclopropylacrylamide, N-isopropylacrylamide, methacrylamide, N-methylmethacrylamide, N,N- dimethylaminopropylacrylamide, N-methyl-N-ethylacrylamide, N-methyl-N-isopropylacrylamide, N-methyl-N-n-propylacrylamide, N,N-diethylacrylamide, N-acryloylpyrrolidine, N-acryloylpiperidine, N-acryloylmethylhomopiperidine, N-acryloylmethylpiperidine, N-vinylpyrrolidone, N-vinylcaprolactame, hydrophilic esters of (meth)acrylic acid, N-[Tris(hydroxymethyl)-methyl]acrylamide, N-acryloylmorpholine, 2,4-pentadienol, poly(ethylene glycol) acrylate, etc.

Typical examples of water soluble monomers that form water insoluble polymers are some substituted methacrylates and acrylates such as 2-hydroxyethylmethacrylate, 2-hydroxyethylacrylate, acrylonitrile, 2-(2-methoxyethoxy)-ethyl (meth)acrylate, 2-(2-hydroxyethoxy)ethyl (meth)acrylate, etc.

Typical examples of alcohols that can be added to the mixture are ethylene glycol, diethylene glycol, triethylene glycol, glycerol, isopropanol, etc.

Typical examples of water soluble polymers that can be used in the present invention can be any water soluble polymer prepared from water soluble monomers cited above and ionic water soluble monomers such as styrene sulphonate, (meth)acrylic acid sodium (or potassium) salt, etc.

Water soluble polymers can also be poly(vinyl alcohol), poly(propylene oxide)-b-poly(ethylene oxide)-b-poly (propylene oxide) (PPO-PEO-PPO), poly(ethylene oxide), dextran, poly(2-ethyl 2-oxazoline), etc.

Typical examples of insoluble polymers that can be used in the present invention and be added to the reaction mixture as aqueous dispersions or emulsions are any insoluble polymer that can be prepared by the processes of dispersion polymerization and of emulsion polymerization.

Some typical examples are poly(methyl methacrylate), poly(styrene), acrylonitrile-butadiene-styrene (ABS) terpolymer, styrene acrylonitrile, poly(acrylonitrile)copolymers (SAN), poly(vinylchloride), styrene-butadiene rubber (SBR), poly(butadiene), poly(chloroprene), poly(vinylidene fluoride), poly(trifluoroethylene), poly(vinyl fluoride), poly(vinyl acetate), ethylene-vinyl acetate copolymers, etc.

Procedures for preparing latexes by emulsion polymerization are well-known and are for instance described in the following book (Emulsion Polymerization and Emulsion Polymers; Peter A. Lovell and Mohamed S. El-Aasser (Ed).; John-Wiley & Sons, England 1997; ISBN = 0471967467). Commercial latexes can be used for the invention.

Procedures for preparing latexes by dispersion and suspension polymerizations are well-known and are for instance described in the following reference: Kawaguchi et al Adv Polym Sci (2005) 175: 299-328. Polymers prepared by these processes are submicron-sized monodisperse particles with a diameter between 0.06-0.7 µm when obtained by conventional emulsion polymerization and micron-sized monodisperse particles between 50-1000 µm when obtained by suspension polymerization.

The water swelling clay mineral, which is used in the present invention, is a type of clay mineral which can be dispersed homogeneously in water, and particularly preferred are layered clay minerals which can be dispersed in water at a molecular level (a single layer) or at a level close to the molecular level.

Examples of such water swelling clay minerals include water swelling smectite, water swelling silicates such as kenyanite and magadiite, and water swelling mica. Practical examples are water swelling hectorite which contains sodium as an interlayer ion, water swelling montmorillonite, water swelling saponite, water swelling synthetic mica and water swelling kenyaite or magadiite. The water swelling clay minerals of the present invention are required to be dispersible in a homogeneous and finely divided manner, and it is preferable for the water swelling clay minerals to be dissolved in an aqueous solution.

Here, the dissolution of the clay minerals means that there is no precipitation or flocculation of the clay minerals or no coarse mineral aggregate to form a turbid solution. Moreover, the dissolution cannot lead to the formation of a gel. After dissolution a sol is obtained which means a free flowing solution , with a low viscosity equal to or or less than 3 Pa.s at a shear rate of between 0.1 and 100 s⁻¹ at room temperature.

A more preferable type is a clay mineral which can be dispersed as nanometer thick particles within 1 to 10 layers and the most preferable type is a clay which can be dispersed as 2 layer thick particles.

Inorganic fillers that can be added to the reaction mixture are silica, titanium dioxide, talc, metal oxides (Bi2O3 Fe2O3, Fe3O4, ZnO, Al2O3, CuO, and the like), metals (Bi, Fe, Pb, W, Cu, Au, Al, Ag), metal halides (AgCl, AgBr,...), carbonates (CaCO3, MgCO₃, SrCO₃, BaCO₃,...), sulfates (BaSO₄, SrSO₄, PbSO₄, ...), phosphates (Mg₃(PO4)₂, Ca₃(PO₄)₂, Ba₃(PO₄)₂,...), hydroxyapatite (Ca₁₀(PO₄)₆(OH)₂), sulfides (CdS, PbS, AgS,...), selenide (CdSe), telluride (CdTe),carbon black, carbon nanotubes, carbon fibers, graphite oxide, graphene, glass wool, glass fibers, etc. of any shapes and sizes from centimeter to nano-sized dimensions depending on the application. If required, these inorganic fillers can be chemically modified in order to render them dispersible in the reaction mixture. Some of them can also be formed in situ.

The number of different monomers used in the mixture is between 1 and 6, preferably between 1 and 4, more preferably between 1 and 3.

The weight ratio between the monomers in the monomer mixture according to the invention is between 1/0.01 and 1/1, preferably between 1/0.1 and 1/1, and more preferably between 1/0.2 and 1/1.

The total weight percentage of the monomers fraction in the mixture according to the invention is between 50% and 1%, preferably between 30 and 5%, and more preferably between 25 and 5%.

The total weight percentage of the water swelling clay fraction in the mixture according to the invention is between 30% and 1%, preferably between 20 and 5%, and more preferably between 20 and 7%.

Instead of one clay type, a mixture of water swelling clays can be used.

The total weight percentage of the fraction of alcohols that can be added to the reaction mixture according to the invention is between 30% and 1%, preferably between 30 and 2%, and more preferably between 25 and 3%.

The final weight percentage of the water fraction in the mixture according to the invention is between 90% and 10%, preferably between 80 and 20%, and more preferably between 80 and 30%.

Instead of water swelling clays alone, mixtures of water swelling clays and silica particles or other inorganic nanofillers can be used.

Colloidal silica contains polysilicon dioxide with Si-OH groups on the surface of each particle. These Si-OH groups can react with silanes so that a chemical bond exists between the inorganic modified organic matrix and the silica particle. Suitable examples of colloidal silica include those having various particle sizes and surface treatments. The colloidal silica preferably has an average particle size of 1 to 500 nanometers, more preferably 1 to 100 nanometers and most preferably 1 to 50 nanometers.

The surface treatments include alkali washing with bases such as sodium or ammonium hydroxide in order to keep negative charges. Examples of colloidal silica are those available from DuPont under the Ludox® tradename.

When dense inorganic fillers such as metals and metal oxides are needed, the total weight percentage of the fraction of inorganic fillers that can be added to the reaction mixture according to the invention is between 50% and 0.01%, preferably between 40% and 0.015%, and more preferably between 30% and 0.02%.

When light inorganic fillers such as silica, titanium dioxide, talc, carbon black, carbon nanotubes, graphene, graphite oxide, fiber glass, or carbon fibers are needed, the total weight percentage of the fraction of inorganic fillers that can be added to the reaction mixture according to the invention is between 40% and 0.5%, preferably between 30% and 1%, and more preferably between 20% and 1%.

The present invention also concerns a preparation method for a HNC with a composition according to this invention consisting of the following steps : dissolving a clay with a solubility between 100 g/l and 330 g/l in water; adding one or more water soluble polymers and/or water insoluble polymer dispersions; adding one or more polymerization initiators; optionally keeping the reaction mixture under an inert atmosphere; injecting the reaction mixture into moulds; placing the moulds in an oven at a suitable temperature and for an appropriate time span such as overnight to carry out the polymerization reaction; demoulding the object consisting of polymerized hydrogel.

The present invention also concerns the use of a HNC in general, and in particular with a composition according to this invention, as a shock absorbing material in shock absorbing surfaces, devices or parts, especially where high impact resistance must be achieved or where a high elongation of the material is required.

Many applications can be envisioned such as in road safety equipment such as bumpers, emergency exit absorbers, runaway truck or escape lanes, shock absorbers for vehicles, shock absorbers for supporting very heavy loads such as in the support of ship engines or of earthquake resistant buildings. But also lesser loads can be envisioned such as the use in shoes or mattresses, cushions, sofas where its shock absorbing properties can be relevant.

It is obvious that the composition of the nanocomposite hydrogels according to the invention can be tuned to the specific requirements of the application.

It is also obvious that the composition can be enriched by specific components such as dyes, flame retardants or other organic or inorganic filler materials to suit specific requirements of the application. In fact, the nanocomposite hydrogel can act as a flame retardant by itself due to the high clay and high water content.

With the intention of better showing the characteristics of the invention, hereafter, as examples without any limitative character, preferred forms of embodiment are described of improved HNCs, with reference to the accompanying drawings, wherein:
figure 1 shows Table I comparing the compression moduli of HNCs according to the invention with the state of the art;
figure 2 graphically represents the measured viscosity values of different Laponite® clay types, dispersed in water as a function of the shear rate at room temperature;
figure 3 graphically represents the compression modulus for selected HNCs according to the invention;
figure 4 shows Table II comparing the compression moduli of HNCs as a function of composition for one type of clay and one type of monomer;
figure 5 graphically represents the compression modulus of HNCs according to the invention as a function of polymer content and of clay content;
figure 6 shows Table III comparing the compression moduli of HNCs as a function of compositions with clay particles with and without added silica particles;
figure 7 shows Table IV comparing the compression moduli of HNCs with different types of initiators.
figure 8 shows Table V comparing the compression moduli of HNCs with addition of prepolymerized water-soluble polymer;
figure 9 shows Table VI comparing the compression moduli of HNCs with and without addition of prepoplymerized water-insoluble polymer;
figure 10 shows Table VII comparing the compression moduli of HNCs with and without the presence of gold nanoparticles.

### EXAMPLE 1

Preparation of hydrogel nanocomposites (HNCs) according to the invention using Laponite® S482 as a clay and K₂S₂O₈/TEMED as an initiator.

As a typical example of clay 3.5491 g of Laponite® S482 is first dissolved in 25 ml of water. To this solution is added 1.7746 g of dimethylacrylamide (DMAA) followed by 1.7746 g of 2-hydroxyethyl-methacrylate (HEMA). A first vacuum/argon cycle is realized before placing the reaction mixture under inert atmosphere of argon. A quantity of 0.71 ml of a solution containing 2 ml of N,N,N',N'-tetramethylethylenediamine (TEMED) in 100 ml of water is added to the reaction mixture. A second vacuum/argon cycle is realized before placing the reaction mixture under an inert atmosphere of argon. A quantity of 2.66 ml of a solution containing 1.6 g of potassium persulphate (K₂S₂O₈) in 200 ml of water is added to the reaction flask.

The reaction mixture is injected into moulds that are placed in an oven at 34°C for 22 hours. Weight amounts of the different reactants are summarized in Tables 1 to 4 with the compression modulus of the resulting hydrogel nanocomposites as measured with an Instron 5566 instrument and obtained from the initial slope of a compression profile.

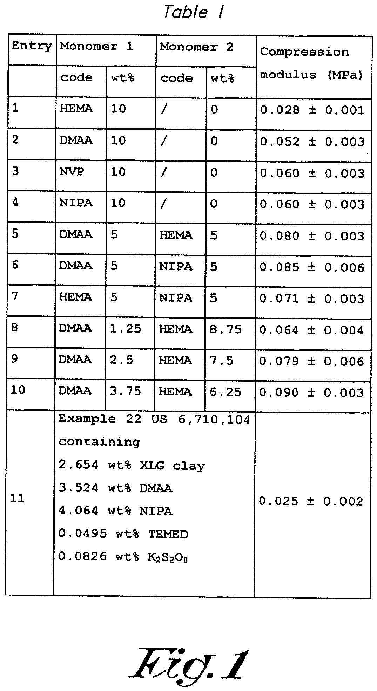

For easy comparison, our results are lined up with the hydrogel formulation of Haraguchi having the highest compression modulus as described in example 22 of Haraguchi's patent (US 6.710.104), the results of which are summarized in entry 11 of Table I as shown in Figure 1.

In Table I, whenever the percentage of clay is not specified, it is meant to be 10 wt%; HEMA means 2-hydroxyethyl methacrylate; DMAA means N,N-dimethylacrylamide; NVP means N-vinyl pyrrolidone; NIPA means N-isopropylacrylamide; TEMED means N,N,N',N'-tetramethylethylenediamine.

### a) Influence of the type of clay: Laponite® XLG vs Laponite® S482.

HNCs prepared according to the present invention using Laponite® S482 reach much higher compression moduli since with this S482 type of clay, the clay content in HNCs can be significantly increased without running into viscosity problems, in contrast with the Laponite® XLG type (medical grade of the Laponite@ RD) used in HNCs of Haraguchi.

To better illustrate these viscosity problems, flow sweep experiments were performed using an ARES-G2 Rheometer from TA Instruments on different clay dispersions at 20°C using a cone-plate geometry (diameter: 50 mm, angle: 0.0397 rad, gap: 0.0525 mm). The clay dispersions were obtained by adding a predetermined mass of clay to 25 ml of water in order to achieve the desired weight percentage. The solutions were stirred for at least 36 hours before performing the measurement.

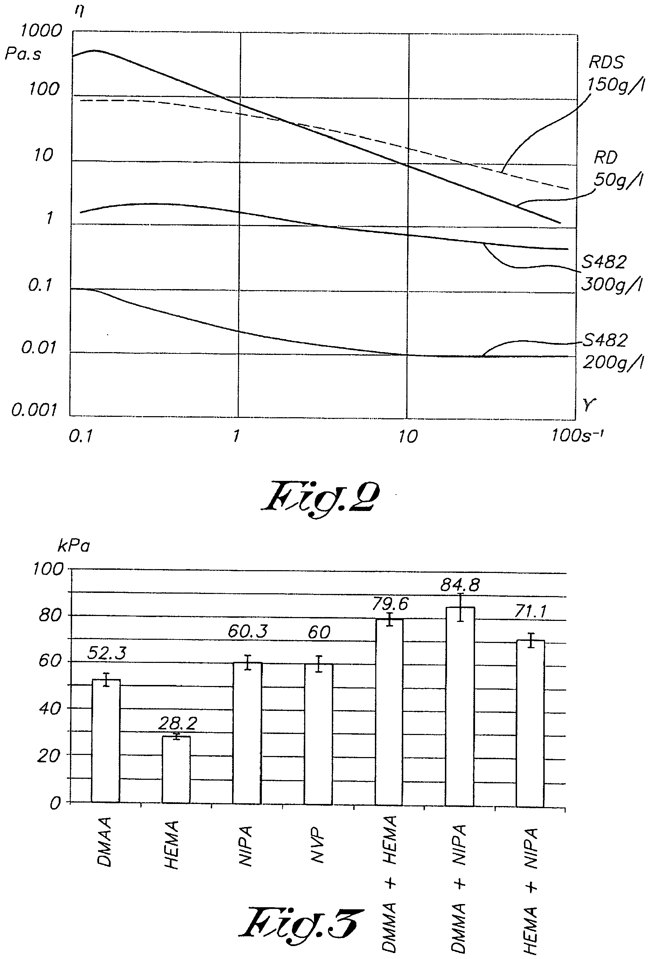

Hence, Figure 2 represents the viscosity value of different clay dispersions as a function of the shear rate. For Laponite® RD and Laponite® RDS, the latter being a Laponite® RD modified with an inorganic pyrophosphate peptiser, an exceedingly high viscosity is obtained with concentrations of 50 g/l and 150 g/l respectively. In contrast, with Laponite® S482 it is possible to achieve dispersions of low viscosity (less than 3 Pa.s) with a much higher amount of clay, namely 200 g/l and even 300 g/l, at the same shear rates.

Since the solubility of Laponite® RD or Laponite® XLG (medical grade equivalent of the former) is limited in water, its concentration in the formulation is limited to 20 g/l and cannot be easily increased further unless using a troublesome mixing procedure utilizing rotation and revolution described in Macromolecules 2006, 39, 1898. Substituting Laponite® type XLG (or RD) for type S482 is therefore very beneficial to form HNCs with enhanced compression moduli since higher amounts of clay can be used without any problems of excessive viscosity and exfoliation (compare entry 11, Table I with entries 2 to 10, Table I represented in Figure 1).

### b) Influence of the type of monomer mixture.

Table I represented in Figure 1 shows that for an identical total weight percentage in monomer, mixtures of monomers yield hydrogels with a significantly higher compression modulus than hydrogels obtained with only one type of monomer.

For instance, a mixture of DMAA with HEMA can reach a compression modulus value as high as 0.090 MPa (Table I, entry 10) compared to 0.028 MPa for the HNCs formed with HEMA only (Table I, entry 1) and to 0.052 MPa for DMAA only (Table I, entry 2).

HNCs of the present invention show a 360% increase in compression modulus when compared with HNCs of Haraguchi (Table I, entry 11). This is also illustrated in Figure 3 for a few selected hydrogels.

Figure 3 represents the compression modulus of hydrogels with either one monomer or with a mixture of monomers such as HEMA or 2-hydroxyethyl methacrylate, DMAA or N,N-dimethylacrylamide, NVP or N-vinyl pyrrolidone, NIPA or N-isopropyl acrylamide. In Figure 3 the weight percentage of Laponite® S482 is 10% and the total weight percentage of monomers is 10% (when a mixture of monomers is used, it is a 1:1 mixture).

Figure 3 clearly demonstrates the synergistic effect on the compression modulus obtained by mixing two monomers.

### c) Influence of clay content.

Table II represented in Figure 4 shows that increasing the clay content enhances the compression modulus significantly. Interestingly Laponite® S482 used in the present invention can be incorporated at a higher content in HNCs compared to Laponite® XLG (or RD) used by Haraguchi, leading to HNCs with a much higher compression modulus.

For instance, comparison of entry 11, Table I with entry 3, Table II shows that the HNCs according to the invention have a compression modulus that is 740% higher when compared with HNCs of Haraguchi.

Haraguchi stated that the higher the content of monomers and of clay is, the higher is the compression modulus (Advanced Materials, 2002, 14,1120).

Figure 5 graphically shows the compression modulus of HNCs with DMAA or N,N-dimethylacrylamide monomer and Laponite® S482 as a clay. The DMAA content ranges from 5 to 15 wt% and that of Laponite® S482 ranges from 5 to 15 wt%. The following legend lists the ranges of compression modulus expressed in MPa that are indicated by the following letter code to label specific areas of the graph surface.

| Code Letter | Compression modulus range in MPa |
|---|---|
| a | 0.00 - 0.03 |
| b | 0.03 - 0.06 |
| c | 0.06 - 0.09 |
| d | 0.09 - 0.12 |
| e | 0.12 - 0.15 |
| f | 0.15 - 0.18 |
| g | 0.18 - 0.21 |
| h | 0.21 - 0.24 |
| i | 0.24 - 0.27 |

Unexpectedly, figure 5 shows that the highest compression modulus is not obtained for the highest clay and monomer content as predicted by Haraguchi. Instead, the best composition for a high compression modulus, while maintaining a good viscosity for the reaction, is obtained for the combination of 15 wt% Laponite® S482 and 5 wt% DMAA. The compression modulus of HNCs according to this composition is 0.258 MPa ± 0.008 and is 1032 % higher compared with Haraguchi's modulus. This is because the compression modulus unexpectedly starts to rise sharply instead of decreasing further when lowering the polymer content below 10. wt% at a fixed clay content of 15 wt%.

### EXAMPLE 2

Preparation of hydrogel nanocomposites according to the invention using Laponite® S482 as a clay, using silica particles, and using K₂S₂O₈/TEMED as an initiator.

1.7746 g of Laponite® S482 clay is first dissolved in 22.34 ml of water. To this solution is added 3.41 ml of an aqueous solution of Ludox® HS-40 silica particles. To this solution is then added 3.5498 g of N,N-dimethyl-acrylamide (DMAA). A first vacuum / argon cycle is realized before placing the reaction mixture under an inert atmosphere of argon. A quantity of 0.71 ml of a solution containing 2 ml of TEMED (N,N,N',N'-tetramethylethylenediamine) in 100 ml of water is added to the reaction mixture. A second vacuum/argon cycle is realized before placing the reaction mixture under an inert atmosphere of argon. A quantity , of 2.66 ml of a solution containing 1.6 g of potassium persulphate (K₂S₂O₈) in 200 ml of water is added to the reaction flask.

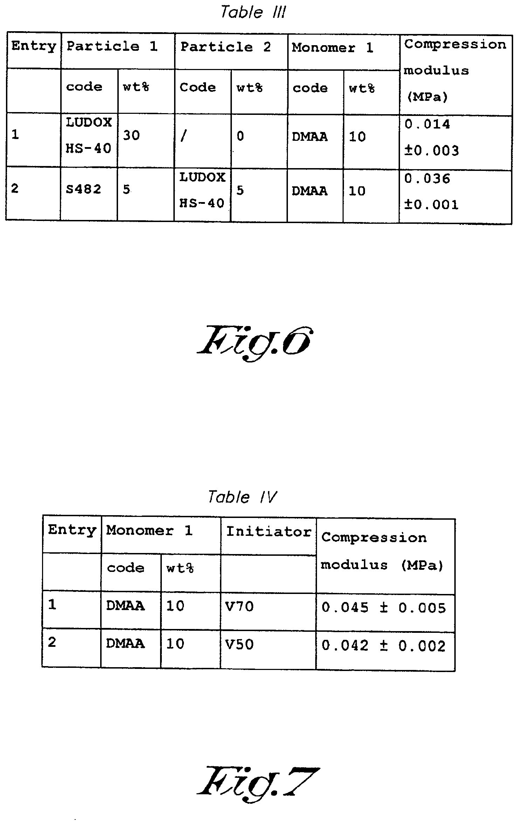

The mixture is injected into moulds that are placed into an oven at 34°C for 22 hours. Weight amounts of the different reagents are summarized in Table III represented in Figure 6. In this Table III the measured resulting compression moduli are obtained by the initial slopes of the compression profile and summarized for each different hydrogel nanocomposite formed.

Compression moduli obtained are significantly higher than Haraguchi's values (Table I, entry 11).

### EXAMPLE 3

Use of additional free radical initiators.

3.5491 g of Laponite® S482 clay is first dissolved in 28.37 ml of water. To this solution is added 3.5498 g of DMAA. 2.66 ml of a solution of 1.6 g of potassium persulphate (K₂S₂O₈) in 200 ml of water is added to the reaction mixture as well as 0.0244 g of V-70 (2,2'-azobis(4-methoxy-2,4-dimethyl valeronitrile) or 0.0213 g of V-50 (2,2'-azobis(2-methylpropionamidine)dihydrochloride.

A vacuum/argon cycle is realized before placing the reaction mixture under inert atmosphere of argon. The mixture is injected into moulds and these are placed into an oven at 34°C for 22 hours in case V-70 was chosen or at 50°C for 22 hours in case V-50 was chosen as an initiator.

Weight amounts of the different reagents are summarized in Table IV, presented in Figure 6, with the resulting compression moduli obtained by the initial slope of the compression profile for each hydrogel nanocomposite measured. The compression moduli are significantly higher than the values obtained by Haraguchi.

### EXAMPLE 4

Addition of prepolymerized water-soluble polymers.

3.5491 g of Laponite® S482 clay is first dissolved in 25 ml of water. To this solution is added 1.7746 g of N,N-dimethyl-acrylamide (DMAA followed by 1.7746 g of PDMAA (poly N,N-dimethyl-acrylamide of Mn = 10000 g/mol; Mw/Mn = 1.3) or 1.7746 g of alcotex (PVAc - 72.5% hydrolyzed polyvinyl acetate). A first vacuum/argon cycle is realized before placing the reaction mixture under an: inert atmosphere of argon. A quantity of 0.71 ml of a solution of 2 ml of N,N,N',N'-tetramethylethylenediamine (TEMED) in 100 ml of water is added to the reaction mixture. A second vacuum/argon cycle is realized before placing the reaction mixture under an inert atmosphere of argon. A quantity of 2.66 ml of a solution containing 1.6 g of potassium persulphate (K₂S₂O₈) in 200 ml of water is added to the reaction flask. The mixture is injected into moulds that are then placed in an oven at 34°C for 22 hours.

The resulting compression modulus as measured by the initial slope of the compression profile with an Instron 5566 apparatus of the nanocomposite hydrogel obtained is 0.130 +/- 0.009 MPa.

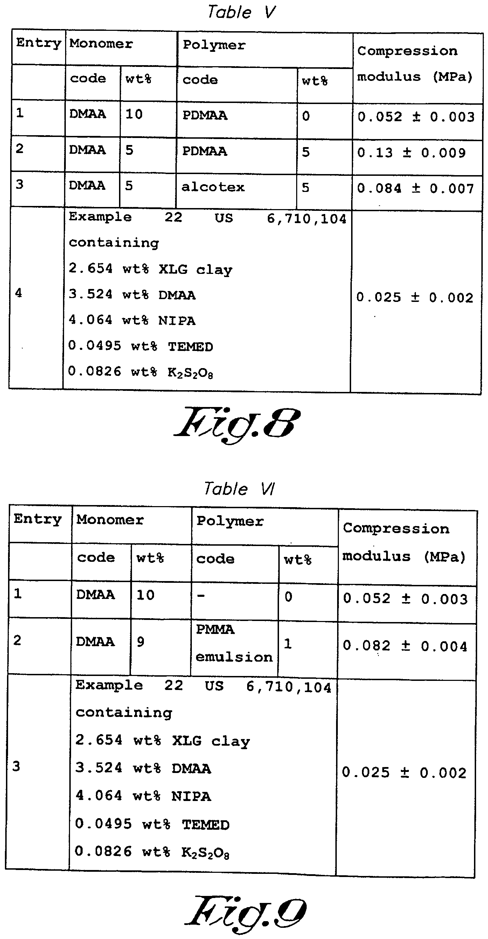

Importantly, adding pre-polymerized polymer in the reaction mixture increases the compression modulus of the HNCs for the same polymer content in the final HNCs, as shown by comparing entries 1 and 2 and by comparing entries 1 and 3 of Table V represented in Figure 8.

Indeed substituting half of DMMA by pre-polymerized alcotex or PDMAA increases the compression modulus from 0.052 MPa to 0.084 MPa in the case of alcotex and from 0.052 MPa to 0.13 MPa in the case of PDMAA.

Table V also shows that the compression modulus of HNCs formed from the formulation according to the invention containing 5 wt% prepolymerized PDMAA and 5 wt% DMAA (Table V, entry 2) is 520% higher than the optimal composition of Haraguchi (Table V, entry 4).

Table V also shows that the compression modulus of HNCs formed from the formulation according to the invention containing 5 wt% prepolymerized alcotex and 5 wt% DMAA (Table V, entry 3) is 330% higher than the optimal composition of Haraguchi (Table V, entry 4).

### EXAMPLE 5

Addition of an aqueous dispersion of a water-insoluble polymer.

### a) Dispersion polymerization of methyl methacrylate (MMA):

In a 50 ml flask is added 25 ml of a degassed solution of alcotex (35.5 g/l PVAc (polyvinyl acetate) 72.5% hydrolyzed) and 5 ml of degassed methyl-methacrylate (MMA).

The reaction mixture is stirred at 80°C and a degassed solution of K₂S₂O₈ (1 g K₂S₂O₈ in 20 ml of water) is added. After a reaction time of 3 h, the reaction mixture is cooled to room temperature. The conversion of MMA amounts to 100%.

### b) Preparation of HNC :

In a 50 ml flask 3.5491 g Laponite® S482 clay is dissolved in 15 ml of water. To this solution is added 3.1942 g of N,N-dimethyl-acrylamide (DMAA) followed by 10 ml of the polymethylmethacrylate (PMMA) dispersion. A first vacuum/argon cycle is realized before placing the reaction mixture under an inert atmosphere of argon. A quantity of 0.71 ml of a solution of 2 ml of TEMED (N,N,N',N'-tetramethylethylenediamine) in 100 ml of water is added to the reaction mixture. A second vacuum/argon cycle is realized before placing the reaction mixture under an inert atmosphere of argon. A quantity of 2.66 ml of a solution containing 1.6 g of potassium persulfate (K₂S₂O₈) in 200 ml of water is added to the reaction flask. The mixture is injected into moulds that are placed in an oven at 34°C for 22 hours.

Surprisingly, substituting only 1 wt% of DMAA by PMMA, added as an aqueous dispersion, increases significantly the compression modulus by 158% as can be read by comparing entries 1 and 2 of Table VI, represented in Figure 9.

Importantly, compared to the optimal composition of Haraguchi, the compression modulus is increased by 328% using the above procedure.

### EXAMPLE 6

In situ formation of gold nanoparticles in HNCs.

3.4513 g Laponite® S482 clay is first dissolved in a solution of 6.9 mg of HAuCl4 in 25 ml of water. Gold nanoparticles are formed in situ by reduction of HAuCl4 presumably by the etidronate sodium groups at the surface of clay which is experimentally shown by the color change of a Laponite® type S482 dispersion from yellow (HAuCl4) to red (gold nanoparticles) while this color change is not observed in a Laponite® RD dispersion.

To this mixture are added 3.4513 g of DMAA and 2.6 ml of a solution of 1.6 g of potassium persulphate (K₂S₂O₈) in 200 ml of water.

A vacuum / argon cycle is realized before placing the reaction mixture under an inert atmosphere of argon. The mixture is injected into moulds that are placed in an oven at 80°C for 22 hours. The resulting compression modulus of the HNC obtained as measured by the slope of a compression profile with an Instron 5566 apparatus is 0.096 MPa.

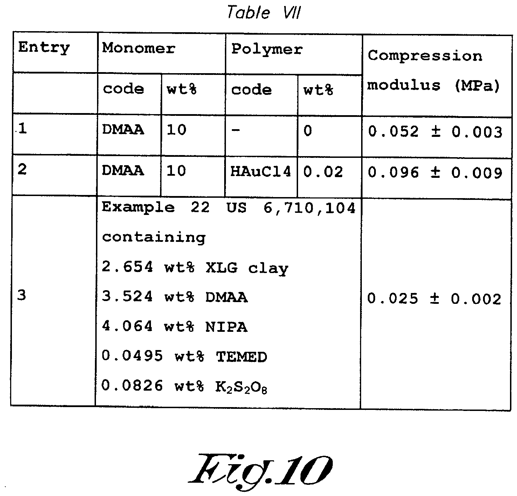

This result is presented in Table VII, as represented in Figure 10.

Surprisingly, the in situ formation of a very low content of gold nanoparticles (0.02 wt%) in the HNC increases by 185% the compression modulus when compared with the same HNC without the nanoparticles as can be seen by comparing entries 1 and 2 in Table VII, Figure 10..

Importantly, when compared with the optimal composition of Haraguchi, the compression modulus is increased by 384% using the in situ generation of gold nanoparticles as illustrated by comparing entries 2 and 3 in Table VII, Figure 10.

## Claims

1. Composition of a hydrogel nanocomposite (HNC) material, containing one or more water soluble polymers (A) a water swelling clay mineral (B), and water (C), , **characterized in that** the clay mineral has a solubility in water between 100 g/l and 330 g/l, preferably between 150 and 330 g/l and most preferably between 200 and 330 g/l.

2. Composition of a hydrogel nanocomposite material according to claim 1 **characterized in that** the total weight percentage of the water swelling clay fraction in the mixture is between 50 wt% and 1 wt%, preferably between 30 and 5 wt%, and more preferably between 25 and 5 wt% , while the monomers fraction in the mixture is between 50 and 1 wt%, and more preferably between 10 and 1 wt%.

3. Composition of a hydrogel nanocomposite material according to claim 1, **characterized in that** the clay mineral is a smectite clay.

4. Composition of a hydrogel nanocomposite material according to claim 1 or 2, **characterized in that** the clay contains a dispersing agent.

5. Composition of a hydrogel nanocomposite material according to claim 4 **characterized in that** the dispersing agent is one or more of the following types : salts of carboxylic acids with group I metal ions or with ammonium ions, group I metal salts of pyrophosphate, or group I metal salts of bisphosphonates of the general formula (PO₃)₂CR₁R₂.

6. Composition of a hydrogel nanocomposite material according to claim 5, **characterized in that** the carboxylic acids are alkyl-carboxylic acids or α-hydroxy-alkyl-carboxylic acids, wherein alkyl stands for C1 to C12 or H.

7. Composition of a hydrogel nanocomposite material according to claim 1 **characterized in that** the compression modulus of the material after polymerization is between 0.03 MPa and 0.3 MPa.

8. Composition of a hydrogel nanocomposite material according to any one of the preceding claims, **characterized in that** silica particles are added to the composition.

9. Composition of a hydrogel nanocomposite material according to claim 1, **characterized in that** the polymerization initiator is potassium persulphate supplemented with 2,2'-azobis(4-methoxy-2,4-dimethyl valeronitrile) and/or with 2,2'-azobis(2-methylpropionamidine)dihydrochloride.

10. Composition of a hydrogel nanocomposite material according to claim 1, **characterized in that** besides a water soluble polymer, also a water-insoluble polymer is added in the form of an aqueous dispersion or emulsion.

11. Composition of a hydrogel nanocomposite material according to any one of the preceding claims, **characterized in that** gold nanoparticles are generated in situ in the reaction mixture or are added to the reaction mixture.

12. Preparation method for a nanocomposite hydrogel material with a composition as described in claim 1, consisting of the following steps : dissolving a clay with a solubility between 100 g/l and 330 g/l in water; adding one or more water soluble monomers; adding one or more polymerization initiators; optionally keeping the reaction mixture under an inert atmosphere; injecting the reaction mixture into moulds; placing the moulds in an oven at a suitable temperature and for an appropriate time span such as overnight to carry out the polymerization reaction; demoulding the object consisting of polymerized hydrogel.

13. Preparation method according to claim 12 for a nanocomposite hydrogel (HNC) with a composition comprising one or more water soluble polymers, **characterized in that** a fraction of the water soluble polymer or water soluble polymers is added as prepolymerized polymer before the polymerization of the nanocomposite hydrogel itself is initiated.

14. Preparation method according to claim 12 for a nanocomposite hydrogel (HNC) with a composition comprising one cr more water soluble polymers and one or more water insoluble polymers, **characterized in that** a fraction of the water insoluble polymer or water insoluble polymers is added as prepolymerized polymer as a dispersion, emulsion or suspension before the polymerization of the nanocomposite hydrogel itse_f is initiated.

15. Use of a nanocomposite hydrogel (HNC) material, containing one or more water soluble polymers (A), a water swelling clay mineral (B), and water (C), **characterized in that** it is used in polymerized form as a shock absorbing material in shock absorbing surfaces, devices or parts.

16. Use of a nanocomposite hydrogel (HNC) material according to claim 15, **characterized in that** the shock absorbing surface has a compression modulus of between 0.03 MPa and 0.30 MPa.

17. Use of a nanocomposite hydrogel (HNC) material according to claim 15, **characterized in that** the shock absorbing surface has a compression modulus of between 0.20 MPa and 0.28 MPa.
